# EUROPEAN PATENT SPECIFICATION

(11) **EP 0 894 743 B1**
(45) Date of publication and mention of the grant of the patent: **02.11.2000**
(21) Application number: 98110740.2
(22) Date of filing: 12.06.1998
(51) Int. Cl.: B65G 17/06

(54) **Module of a conveyor belt and conveyor belt using this module**
Modul eines Förderbandes und Förderband mit einem solchen Modul
Module d'une bande transporteuse et bande transporteuse avec un tel module

(30) Priority: 01.08.1997 IT MI971858
(43) Date of publication of application: 03.02.1999
(73) Proprietor: TECNO POOL S.p.A., 35010 Marsango (Padova) (IT)
(72) Inventor: Lago, Leopoldo, 35013 Cittadella, Padova (IT)
(74) Representative: Petruzzelli, Antonio European Patent Attorney

(56) References cited:
- EP-A- 0 502 639
- GB-A- 1 577 940

## Description

The present invention relates to a module for building a surface for supporting articles in a conveyor belt and to a conveyor belt using this module.

This kind of module for forming support surfaces for conveyor belts is known from the patent GB-A-1 577 940. Said module is supported by the transverse bars of the conveyor belt and comprises a body of the module having a zigzag configuration to allow reciprocal insertion in the case of the bars of the belt approaching other modules which precede or succeed said module in order to define with the latter said surface of the belt for supporting articles. Each module of GB-A-1577940 engages in a hinge manner with a transverse bar by means of a slot extending inside the module parallel to its support surface and engages in a hinge manner another transverse bar by means of a slot extending inside the module and perpendicular to the surface for supporting the load.

Such a kind of module for defining support surfaces of conveyor belts allows modules to approach and move away from each other to a certain extent, thanks to the slot parallel to said load support surface wherein the bar can slide freely.

Nevertheless, in order to avoid risks of withdrawal of the bars inserted in said horizontal slots, provision is made for the use of additional plates having openings which are elongated in the parallel direction to said load support surface in order to restrict longitudinal swinging between the bars of the belt.

Said plate for limiting displacement of the bars of the belt is particularly effective when said belt is moving over drive rollers, when said belt overturns in order to return to the original position of conveying. On this occasion in fact the bars of the belt are subjected, on performing the return curve on a plane vertical to the belt, to actions with components which are longitudinal and orthogonal to the module, which would tend to withdraw the bars of the belt from the respective housings of the module. In GB-A-1 577 940 moreover no provision is made for the belt to perform curves on the plane of conveying of the belt.

A similar module with a zigzag configuration is also known from the patent EP-A-0 502 639 for the building of a surface for supporting articles on a conveyor belt, wherein the openings for inserting the bars of the belt in appropriate attachment housings of the module are formed by two series of openings which are provided on the lower surface of said module. In this way, in the case of blows or actions perpendicular to the support surface of the module, such as for example occur during overturning of the belt on a vertical plane for the return to the original position, the bars may come out of the respective housings with consequent expulsion or rising of the module above the support surface defined by the other modules. This would lead to the constant need for surveillance by staff in order to position said support modules from their housing in the predefined work condition.

The object of the present invention is therefore that of providing a module for building a surface for the support of articles in a conveyor belt, wherein the disadvantages present in similar, already known systems are avoided, in particular by means of which any risk is avoided of removal of the support bars of the belt through actions in a perpendicular direction to the support surface of the module and the risk of withdrawal of said bars in the case of the module support bars moving away in a longitudinal direction of conveying of the belt, without thereby requiring the use of additional plates for restricting the moving away of bars of the belt.

The previous objects are achieved with a module for building a surface for supporting articles in a conveyor belt having the features of claim 1. The fact that the opening for insertion of the bar in the housing of one of the two transverse support bars of the module is arranged asymmetrically in relation to the longitudinal axis of said housing, in such a way that at least one end part of at least one of the longitudinal, vertically spaced, portions defining the housing is engaged by said bar inserted in said housing, allows, when this bar is moved away in relation to the other consecutive support bar of the module, restraint or transmission of a restraining action of said bar in said housing. This enables the use of the aforementioned plates for limiting displacement of the bars of the belt to be avoided.

Moreover, as regards the possible blows or actions in the direction perpendicular to the surface for supporting the load of said module, said actions may be advantageously absorbed by said upper and lower longitudinal portions defining said housing of the bar of the belt which restrain therefore said bar inside the housing in the case of actions which are perpendicular to the longitudinal direction of the module.

The invention likewise relates to a conveyor belt using the module of the present invention, according to claim 13.

The dependent claims refer to advantageous preferred embodiments of the present invention.

Further advantages and features of the present invention will in any case be made clearer on reading the following description, with reference to the accompanying drawings in which:
Fig. 1 is a perspective view of a preferred embodiment of the module of the present invention;
Fig. 2 is a lateral view of the preferred embodiment of the module of the present invention;
Fig. 3 is a plan view from above of the preferred embodiment of the module of the present invention;
Fig. 4 is a lateral view of a portion of the belt using the module according to the preferred embodiment of the present invention, said belt being shown in a condition of displacement of the bars of the belt;
Fig. 5 is a plan view from above of a portion of the belt using the module according to the preferred embodiment of the present invention, said belt being shown while it performs a curve on the conveying plane;
Fig. 6 is a lateral view showing the belt using the support module according to the preferred embodiment of the present invention, while it performs curves on the vertical plane at the drive rollers;
Figs. 7A, 7B and 7C illustrate the phases of engaging of the modules according to the preferred embodiment at the bars of the belt.

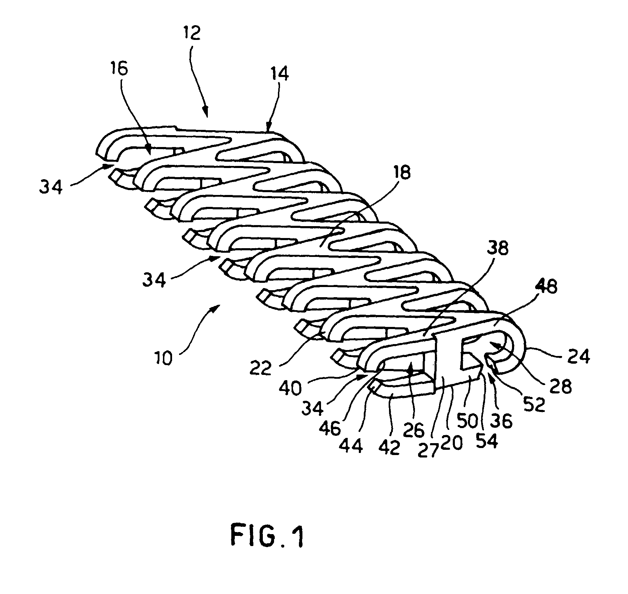

The preferred embodiment of module 10 for building a surface of a conveyor belt for supporting articles is shown in Figures 1 to 3.

Said module can be used in conveyor belts of the type having transverse support bars reciprocally distanced one from the other, such as for example that of Italian patent application no. IT MI970667 owned by the same Applicant.

The module according to the present preferred embodiment therefore comprises a body of the module 12 which has a general zigzag configuration with alternating projections 14 and recesses 16 in such a way as to allow reciprocal insertion of the bars of the belt with corresponding recesses and projections of other modules which precede or succeed said module in order to define with the latter said surface of the belt for supporting articles.

As can be seen from said figures, the body of the module 12 also comprises an upper surface 18 for support of the articles, a lower surface 20 and a first and a second transverse lateral surface 22, 24.

Said body of the module also has a first and a second plurality of housings 26, 28 of insertion for respective transverse bars of the belt 30, 32, which housings 26, 28, separated by a vertical partition 27, are provided with respective openings 34, 36 for inserting said bar in the relevant housing so as to define suitable means of attachment of the module to consecutive transverse support bars of the belt.

As can be seen from the figures, said openings of each of the aforementioned pluralities of openings for allowing the insertion of a transverse bar are aligned transversely one with the other.

More particularly it is foreseen that each opening 34, for insertion of the bar 30 in the respective housing 26, is formed at the lateral transverse surface 22 of said module and that each housing 26 is defined and limited by a respective upper longitudinal portion 38, ending with a transverse edge 40 of said opening 26, and by a lower longitudinal portion 42, ending with a transverse edge 44 of said opening 26 opposite the edge of the upper longitudinal portion 38.

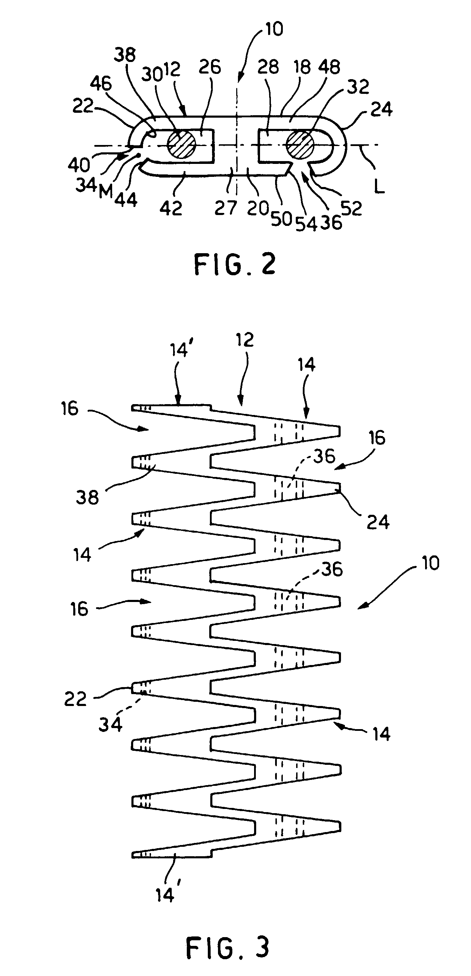

As shown in Figure 2 said housings of the transverse bars have a longitudinal axis L.

Advantageously, said openings 34 for insertion of the bar in the respective housings 26 are arranged asymmetrically in relation to the respective longitudinal axis L.

In this way at least one end part of at least one of said longitudinal portions 38, 42 limiting the housings, in the present case the end part 46 of the upper portion 38, is engaged by said bar inserted in the respective housing 26 when this bar is moved away in relation to the other consecutive support bar of the module, and it is therefore possible to transmit an effective restraining action of the bar within the housing 26.

More particularly, by denoting by reference M the median point of said openings 34, provision is advantageously made for this median point of the openings to be situated, in relation to an arrangement of the module corresponding to the condition of transport of the articles, as displaced downwards in relation to said longitudinal axis L of the housings 26.

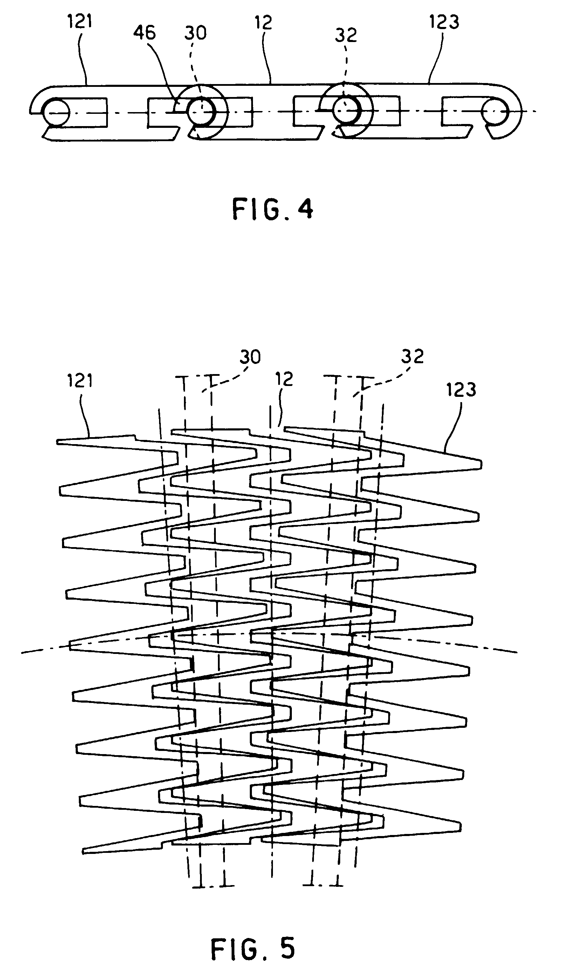

From Figure 4, where said module 12 is shown together with the module 121 which precedes it and module 123 which succeeds it in the belt and where the support bars of said modules are in a distanced condition, it is possible to see that said end part 46 of the upper portion 38, which is formed by an extension curved towards the interior of the housing of the upper longitudinal portion 28, interferes with the respective bar of the belt 30, which bar, through gravity and further crushing caused by the weight of the articles transported, slides in contact with the lower surface of said upper longitudinal portion 38, restraining it effectively in the housing 26.

As regards each of the other housings 28 for attachment of the module to the other transverse support bar 32 of the belt consecutive to the previous bar 30, respective upper and lower longitudinal portions 48, 50 are provided, ending with respective transverse edges 52, 54 opposite one another and suitable for defining a corresponding opening 36 for insertion of the bar 32 in the housings 28.

As can be seen from the figures, said openings 36, transversely aligned one with the other, are formed at the lower surface of said body 14 of the module.

According to a further advantageous feature provision is made for said longitudinal portions 38, 42 and 48, 50, limiting the housings 26 and 28, to be elastically yielding through bending and for said openings 34, 36, for insertion of the transverse bars in the respective housings, to have an aperture or distance between the transverse edges, 40, 44 and 52, 54 respectively, limiting said openings 34, 36, which is smaller than the diameter of said bars of the belt, in order to achieve release-insertion of said bar in said housing. In this way the restraining capacity of the bars in said housings of the module is increased.

In order to encourage further the insertion of the bars in the housings of the module provision is also made for said transverse edges limiting the insertion openings to be tilted in order to converge towards the interior of the housing.

As shown in the Figures, said housings 26, 28 of the module are longitudinally elongated to allow free sliding therein of the respective transverse bars of the belt. This enables rotation of said module in relation to the bars and thus allows the belt to perform curves on the plane of conveying of the articles, as shown in Figure 5.

As shown above all by Figures 1, 3 and 5, the projections 14 of the zigzag body of the module have in turn an elongated triangular shape suitable for insertion between the recesses 16 with a corresponding elongated triangular shape of the adjacent modules. As a result an even support surface is obtained which has an extremely small gap between the adjacent projections 14 of consecutive modules and also when said bars are moved away.

Moreover the end projections 14' of the zigzag body of the module have a width equal to half of the intermediate projections 14, in such a way that, by matching with a corresponding projecting portion of half width of the adjacent module, the joint co-penetrability is guaranteed of the two projections of the two adjacent modules in a recess defined by the adjacent modules which precede, or in other cases by a single module which precedes.

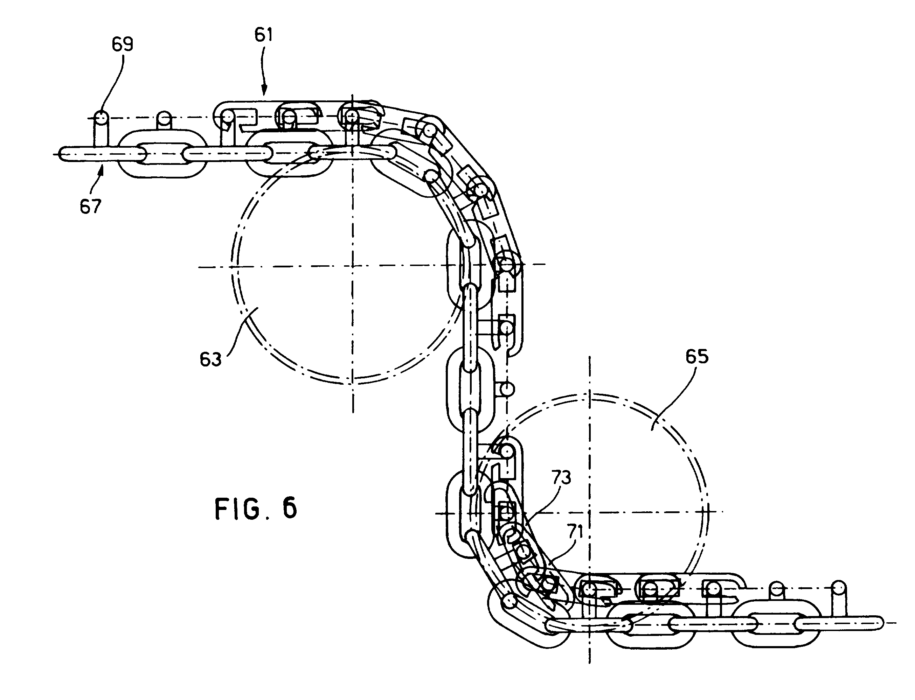

According to a further advantageous feature said body of the module is provided with transverse lateral surfaces 22, 24 with an arched shape in order to allow rotation of the module without impediments during deviations or overturning of the belt on a vertical plane, as shown for example in Figure 6 where said belt 61 passes between two consecutive drive rollers 63 and 65.

From this Figure 6 it can be understood how the belt, in a known manner, includes a first and a second longitudinal lateral chain, whereof only one, denoted by reference numeral 67, is shown in this figure, and wherefrom said transverse bars extend, denoted in this figure by reference numeral 69.

At this kind of drives, the bars of the belt undergo, in relation to the one which precedes or follows, displacements which are longitudinal and orthogonal to the support surface of the module, which severely tests the restraint of the same module at the transverse bars of the belt.

More particularly, it is clear that, at the drive roller 65, the bars undergo both a relative displacement in an orthogonal direction to the modules and an approach movement. On this occasion the vertical edges 24 of the longitudinal ends of the projections 14 are compressed against the opposite back surface of the corresponding recess 16 and between consecutive modules, for example between module 71 and module 73, in Figure 6, there is relative rotation on a vertical plane. The roundness of these transverse lateral portions 22 and 24 of the projections thus ensures free rotation with sliding of the consecutive modules one in relation to the other, without any impediment to rotation occurring, otherwise possible in the case of non-arched lateral surfaces. Thus the creation of forces, which could break the modules or take said modules outside of their predefined arrangement, is avoided.

In accordance with a further advantageous feature, each of said openings 34 on the transverse lateral surface of the module lies on a plane which is tilted through an angle in relation to the vertical line. In this way, since the best direction for insertion of the bars in the respective housings, through said openings, is the one orthogonal to the plane whereon the opening lies, consequently the best direction of insertion of the bar in the housings with insertion openings on the lateral surface is tilted through an angle in relation to the vertical line. By way of an example said angle can be 25° in relation to the horizontal line.

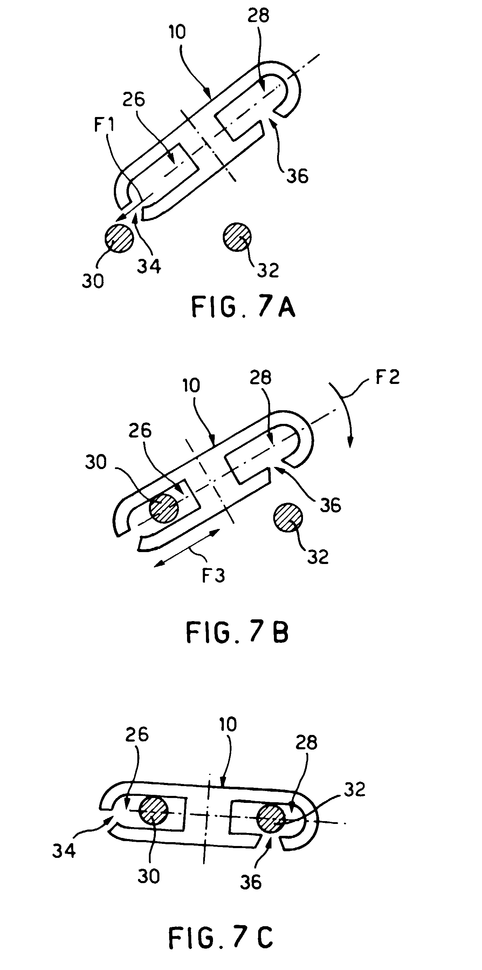

With reference to the subsequent Figures 7A, 7B and 7C, it is possible to see how the engaging of the module with two consecutive bars of the conveyor belt has a first phase, shown in Figure 7A, of moving together in a rectilinear direction, angled in relation to the vertical line, shown by the arrow F1 in the Figure, with subsequent insertion of a bar 30 in the housing provided of the opening on the transverse lateral surface, as shown in Figure 7B. This is followed by a rotation of the module, as shown by the arrow F2 in Figure 7B, hinging on the bar 30 already inserted, obtaining, also thanks to appropriate longitudinal sliding movements, shown by the arrow F3 in the Figure, of the housing 26 on the hinging bar 30, the insertion of the consecutive bar 32 in the other housing 28 having the opening 36 for insertion on the lower surface, obtaining the final arrangement shown in Figure 7C. In this way it is possible to obtain easy insertion of the module on the bars whatever the reciprocal distance between the bars concerned.

Said module is preferably made in a plastic material, said bars generally being in a metal material.

It must naturally be understood that what has been written and shown with reference to the preferred embodiment of the present invention has been given purely by way of a non-limiting example of the principle claimed.

In particular it must be understood that, although the preferred embodiment of the module comprises a plurality of housings, and relevant openings in the lateral surface, it could also feasibly be foreseen to provide a module having, instead of such a plurality of housings and openings, a single housing for the bar with an opening for insertion asymmetrically arranged in the lateral surface of the module.

## Claims

1. A module (12) for building a support surface (18) for articles in a conveyor belt moving in a longitudinal direction and comprising transverse support bars for said support surface reciprocally distanced one from the other, said module comprising a body (10) of the module having a zigzag configuration to allow reciprocal insertion in the case of bars of the belt approaching other modules of the surface for supporting articles which precede or succeed, said body of the module having an upper surface (18) for supporting articles, a lower surface (20) and at least one transverse lateral surface (22, 24), said body of the module also having at least one insertion housing (26) for a transverse bar (30) of the belt provided with a respective opening (34) for inserting said bar (30) in said housing (26) and means for attaching the module to at least one other transverse support bar of the belt consecutive to the previous one, said insertion opening (34) being formed in the transverse lateral surface (22, 24) of said module, and said housing (26) for the transverse bar (30) having a longitudinal axis and being defined by an upper longitudinal portion (38) ending with an edge (40) of said opening and by a lower longitudinal portion (42) ending with an opposite edge (44) of said opening, characterised in that said opening (34) for insertion of the bar in said housing (26) is arranged asymmetrically in relation to the axis of said housing (26) in such a way that at least one end part of at least one of said portions (38, 42) defining the housing (26) is engaged by said bar inserted in said housing (26)when the latter is moved away in relation to the other consecutive support bar of the module, in order to transmit to said bar an action of restraining within the housing (26).

2. A module according to claim 1, characterised in that said end engaging part for the bar of the belt is formed by a front extension turned downwards of said upper longitudinal portion (38).

3. A module according to any one of the previous claims, characterised in that said means for attaching the module to at least one other transverse support bar of the belt consecutive to the previous one comprise a second insertion housing (28) for the other transverse support bar of the module, said second housing (28) having a respective opening (36) for inserting said bar in said housing (28) and being defined by a longitudinal portion (48) ending with an edge of said opening (36) and by a lower longitudinal portion (50) ending with an opposite edge of said opening (36), said opening (36) for said second housing (28) being formed in the lower surface of said module.

4. A module according to any one of the previous claims, characterised in that at least one of said insertion (34, 36) openings has an aperture between the transverse edges (40, 44 and 52,54) limiting said opening (34, 36) which is smaller than the diameter of said bar to be inserted and in that said longitudinal portions (38, 42 and 48, 50) defining the housing are elastically yielding by bending so as to provide a release insertion of said bar in said housing (26,28).

5. A module according to claim 4, characterised in that said transverse edges(40, 44 and 52, 54), limiting a respective opening (34, 36) for insertion of the bar in a corresponding housing (26, 28) and openings (34, 36) of insertion, are tilted in order to converge towards the interior of the housing (26, 28).

6. A module according to any one of the previous claims, characterised in that said module has a plurality of said housings (26) for insertion of the transverse bar and a plurality of openings (34) on the transverse lateral surface of the module, said openings (34) being aligned transversely one with the other.

7. A module according to any one of the previous claims from 3 to 6, characterised in that said module has a plurality of said second housings (28) for insertion of the other transverse support bar of the module and a plurality of openings (36) on the lower surface of the module, said openings (36) being aligned transversely one with the other.

8. A module according to any one of the previous claims, characterised in that said housings (26, 28) of the module are longitudinally elongated to allow the free sliding and rotation therein of the respective transverse bars of the belt.

9. A module according to any one of the previous claims, characterised in that said body (10) of the module with a general zigzag configuration is obtained by alternating projections (14)and recesses (16) in such a way as to allow reciprocal insertion with corresponding projections (14) and recesses (16) of other modules which precede or succeed said module in order to define with the latter said surface (18) of the belt for supporting articles, and in that the projections (14) of the zigzag body (10) of the module have an elongated triangular shape suitable for allowing the insertion between recesses (16) with a correspondingly elongated triangular shape of another module.

10. A module according to claim 9, characterised in that end projections (14') of the zigzag-configured body (10) of the module are provided which have a width equal to half of similar intermediate projections (14), in such a way that, by matching end projections (14') with a corresponding projecting portion (14') of half width of the adjacent module, the joint co-penetrability of the two projections (14', 14') of the two adjacent modules in a recess defined by the module or modules consecutive to the latter is guaranteed.

11. A module according to any one of the previous claims, characterised in that said body (10)of the module has transverse lateral surfaces (22, 24) in the form of respective arched sections.

12. A module according to any one of the previous claims, characterised in that each of said openings (34) on the transverse lateral surface of the modules lies on a plane which is slanted by an angle in relation to the vertical line.

13. A conveyor belt for the transport of articles in a longitudinal direction of transfer, said belt comprising transverse support bars reciprocally distanced one from the other and at least one module suitable for defining the support surface of the articles according to any one of the previous claims.

## Patentansprüche

1. Ein Modul (12) für die Bildung einer Tragfläche (18) für Artikel bei einem Förderband, das sich in Längsrichtung bewegt und Quertragstangen für die genannte Tragfläche umfaßt, die jeweils voneinander entfernt angeordnet sind, wobei das genannte Modul einen Modulkörper (10) umfaßt, der eine Zickzackform aufweist, um den gegenseitigen Einschub im Fall von Bandstangen zu ermöglichen, die sich anderen, vorausgehenden oder folgenden Modulen der Artikeltragfläche nähern, wobei der genannte Modulkörper eine obere Fläche (18) zum Tragen der Artikel, eine untere Fläche (20) und mindestens eine seitliche Querfläche (22, 24) aufweist, und der genannte Modulkörper ebenfalls mindestens ein Einschubgehäuse (26) für eine Querstange (30) des Bands aufweist, das mit einer entsprechenden Öffnung (34) für den Einschub der genannten Stange (30) in das genannte Gehäuse (26) ausgerüstet ist, sowie Mittel zur Verbindung des Moduls mit mindestens einer weiteren Quertragstange des Bands, die auf die vorausgegangene folgt, wobei die genannte Öffnung (34) in der seitlichen Querfläche (22, 24) des genannten Moduls gebildet wird und das genannte Gehäuse (26) für die Querstange (30) eine Längsachse hat und durch einen obere Längsteil (38) gebildet wird, der an einer Ecke (40) der genannten Öffnung endet, und mit einem unteren Längsteil (42) an der entgegengesetzten Ecke (44) der besagten Öffnung endet, dadurch gekennzeichnet, daß die genannte Öffnung (34) für den Einschub der Stange in das genannte Gehäuse (26) asymmetrisch in Bezug auf die Achse des genannten Gehäuses (26) angeordnet ist, und zwar derart, daß mindestens ein Endteil von mindestens einem der genannten Teile (38, 42), die das Gehäuse (26) bilden, durch die genannte, in dieses Gehäuse (26) eingeschobene Stange einklinkt, wenn das letztere in Bezug auf die folgende Tragstange des Moduls fortbewegt wird, um die genannte Stange innerhalb des Gehäuses (26) zu halten.

2. Ein Modul gemäß Anspruch 1, dadurch gekennzeichnet, daß der genannte, einklinkende Endteil der Stange des Bands durch eine vordere Ausdehnung gebildet wird, die in Bezug auf den genannten oberen Längsteil (38) nach unten gerichtet ist.

3. Ein Modul gemäß einem beliebigen der vorausgegangenen Ansprüche, dadurch gekennzeichnet, daß die genannten Mittel für die Verbindung des Moduls mit mindestens einer anderen Quertragstange des Bands, die auf die vorausgegangene folgt, ein zweites Einschubgehäuse (28) für die andere Quertragstange des Moduls aufweisen, wobei das genannte zweite Gehäuse (28) eine entsprechende Öffnung (36) für den Einschub der genannten Stange in das genannte Gehäuse (28) aufweist und durch einen Längsabschnitt (48) gebildet wird, der an einer Ecke der genannten Öffnung (36) endet, sowie durch einen unteren Längsabschnitt (50), der mit einer gegenüberliegenden Ecke der genannten Öffnung (36) endet, wobei die genannte Öffnung (36) für das genannte Gehäuse (28) in der unteren Oberfläche des genannten Moduls gebildet wird.

4. Ein Modul gemäß einem beliebigen der vorausgegangenen Ansprüche, dadurch gekennzeichnet, daß mindestens eine der genannten Einschuböffnungen (34, 36) eine Öffnung zwischen den Querecken (40, 44 und 52, 54) aufweist, die die genannte Öffnung (34, 36) begrenzen, die kleiner ist als der Durchmesser der genannten Stange, die eingeschoben werden soll, sowie dadurch, daß die genannten Längsabschnitte (38, 42 und 48, 50), die das Gehäuse bilden, durch Biegen elastisch nachgeben, so daß für einen auskuppelbaren Einschub der genannten Stange in das genannte Gehäuse (26, 28) gesorgt wird.

5. Ein Modul gemäß Anspruch 4, dadurch gekennzeichnet, daß die genannten Querecken (40, 44 und 52, 54), die eine entsprechende Öffnung (34, 36) für den Einschub der Stange in ein entsprechendes Gehäuse (26, 28) und Einschuböffnungen (34, 36) eingrenzen, entsprechend geneigt sind, um in Richtung des Inneren des Gehäuses (26, 28) zusammenlaufen zu können.

6. Ein Modul gemäß einem beliebigen der vorausgegangenen Ansprüche, dadurch gekennzeichnet, daß das genannte Modul eine Vielzahl der genannten Gehäuse (26) für den Einschub der Querstange und eine Vielzahl von Öffnungen (34) an der seitlichen Querfläche des Moduls aufweist, wobei die genannten Öffnungen (34) quer zueinander ausgerichtet sind.

7. Ein Modul gemäß einem beliebigen der Ansprüche von 3 bis 6, dadurch gekennzeichnet, daß das genannte Modul eine Vielzahl der genannten zweiten Gehäuse (28) für den Einschub der anderen Quertragstange des Moduls sowie eine Vielzahl von Öffnungen (36) an der unteren Oberfläche des Moduls aufweist, wobei die genannten Öffnungen (36) quer zueinander ausgerichtet sind.

8. Ein Modul gemäß einem beliebigen der vorausgegangenen Ansprüche, dadurch gekennzeichnet, daß die genannten Gehäuse (26, 28) des Moduls längs verlängert sind, um ein freies Gleiten und Drehen der jeweiligen Querstangen des Bands darin zu ermöglichen.

9. Ein Modul gemäß einem beliebigen der vorausgegangenen Ansprüche, dadurch gekennzeichnet, daß der genannte Körper (10) des Moduls mit einer allgemeinen Zickzackform durch abwechselnde Vorsprünge (14) und Aussparungen (16) erzielt wird, und zwar derart, daß ein gegenseitiger Einschub mit den entsprechenden Vorsprüngen (14) und Aussparungen (16) anderer Module ermöglicht wird, die diesem Modul vorausgehen oder folgen, um mit den letzteren die genannte Oberfläche (18) des Bands zum Tragen von Artikeln zu bilden, sowie dadurch, daß die Vorsprünge (14) des Zickzack-Körpers (10) des Moduls die Form eines gestreckten Dreiecks aufweisen, um den Einschub zwischen die Aussparungen (16) einer entsprechend gestreckten Dreieckform eines anderen Moduls zu ermöglichen.

10. Ein Modul gemäß Anspruch 9, dadurch gekennzeichnet, daß Endvorsprünge (14') des zickzackförmigen Körpers (10) des Moduls vorgesehen sind, die eine Breite aufweisen, die der Hälfte ähnlicher Zwischenvorsprünge (14) entsprechen, und zwar derart, daß durch Anpassen der Endvorsprünge (14') an einen entsprechenden, vorspringenden Abschnitt (14') der halben Breite des anliegenden Moduls die gemeinsame Kopenetrabilität der beiden Vorsprünge (14', 14') der zwei anliegenden Module in einer durch das Modul bzw. die auf die letzteren folgenden Module gebildeten Aussparung gewährleistet wird.

11. Ein Modul gemäß einem beliebigen der vorausgegangenen Ansprüche, dadurch gekennzeichnet, daß der genannte Körper (10) des Moduls seitliche Querflächen (22, 24) in Form von entsprechend gebogenen Abschnitten aufweist.

12. Ein Modul gemäß einem beliebigen der vorausgegangenen Ansprüche, dadurch gekennzeichnet, daß jede der genannten Öffnungen (34) an der seitlichen Querfläche der Module auf einer Ebene liegt, die in Bezug auf die vertikale Linie durch einen Winkel abgeschrägt wird.

13. Ein Förderband für die Beförderung von Artikeln in einer Längsförderrichtung, wobei das genannte Band Quertragstangen umfaßt, die voneinander entfernt angebracht sind, sowie mindestens ein Modul, das für die Bildung der Tragfläche der Artikel gemäß einem beliebigen der vorausgegangenen Ansprüche geeignet ist.

## Revendications

1. Un module (12) pour réaliser une surface de support (18) pour des articles dans une bande transporteuse se déplaçant dans un sens longitudinal et comprenant des barres de support transversales pour ladite surface de support réciproquement écartées l'une de l'autre, ledit module comprenant un corps (10) du module ayant une configuration en zigzag pour permettre leur insertion réciproque lorsque les barres de la bande se rapprochent des autres modules de la surface de support des articles qui précèdent ou suivent, ledit corps du module ayant une surface supérieure (18) de support des articles, une surface inférieure (20) et au moins une surface latérale transversale (22, 24), ledit corps du module ayant également au moins un logement d'insertion (26) pour une barre transversale (30) de la bande munie d'une ouverture respective (34) d'insertion de ladite barre (30) dans ledit logement (26) et des moyens de fixation du module à au moins une autre barre transversale de support de la bande consécutive à celle précédente, ladite ouverture d'insertion (34) étant située dans la surface latérale transversale (22, 24) dudit module, et ledit logement (26) pour la barre transversale (30) ayant un axe longitudinal et étant défini par une portion longitudinale supérieure (38) terminant par un bord (40) de ladite ouverture et par une portion longitudinale inférieure (42) terminant par un bord opposé (44) de ladite ouverture, caractérisé par le fait que ladite ouverture (34) d'insertion de la barre dans ledit logement (26) est disposée asymétriquement par rapport à l'axe dudit logement (26) de manière qu'au moins une partie terminale d'au moins une desdites portions (38, 42) définissant le logement (26) est accrochée par ladite barre insérée dans ledit logement (26) lorsque ce dernier est éloigné par rapport à l'autre barre de support consécutive du module, afin de transmettre à ladite barre une action de contrainte à l'intérieur du logement (26).

2. Un module conformément à la revendication 1, caractérisé par le fait que ladite partie d'accrochage terminal de la barre de la bande est formée par une extension frontale orientée vers le bas de ladite portion longitudinale supérieure (38).

3. Un module conformément à l'une quelconque des revendications précédentes, caractérisé par le fait que lesdits moyens de fixation du module à au moins une autre barre de support transversale de la bande qui suit la précédente comprend un second logement d'insertion (28) pour l'autre barre de support transversale du module, ledit second logement (28) ayant une ouverture respective (36) d'insertion de ladite barre dans ledit logement (28) et étant défini par une portion longitudinale (48) terminant avec un bord de ladite ouverture (36) et par une portion longitudinale inférieure (50) terminant par un bord opposé de ladite ouverture (36), ladite ouverture (36) pour ledit second logement (28) étant formée dans la surface inférieure dudit module.

4. Un module conformément à l'une quelconque des revendications précédentes, caractérisé par le fait qu'au moins une desdites ouvertures d'insertion (34, 36) présente une fente entre les bords transversaux (40, 44 et 52, 54) limitant ladite ouverture (34,36) qui est plus petite que le diamètre de ladite barre à insérer et par le fait que lesdites portions longitudinales (38, 42 et 48, 50) définissant le logement sont élastiquement peu résistantes au fléchissement de manière à permettre une insertion aisée de ladite barre dans ledit logement (26, 28).

5. Un module conformément à la revendication 4 caractérisé par le fait que lesdits bords transversaux (40, 44 et 52, 54) limitant une ouverture respective (34, 36) d'insertion de la barre dans un logement respectif (26, 28) et les ouvertures (34, 36) d'insertion, sont inclinés de manière à converger vers l'intérieur des logements (26, 28).

6. Un module conformément à l'une quelconque des revendications précédentes, caractérisé par le fait que ledit module présente une pluralité desdits logements (26) d'insertion de la barre transversale et une pluralité d'ouvertures (34) sur la surface latérale transversale du module, lesdites ouvertures (34) étant alignées transversalement l'une par rapport à l'autre.

7. Un module conformément à l'une quelconque des revendications de 3 à 6 précédentes, caractérisé par le fait que ledit module présente une pluralité desdits seconds logements (28) d'insertion de l'autre barre de support transversale et une pluralité d'ouvertures (36) sur la surface inférieure du module, lesdites ouvertures (36) étant alignées transversalement l'une par rapport à l'autre.

8. Un module conformément à l'une quelconque des revendications précédentes, caractérisé par le fait que lesdits logements (26,28) du module sont allongés longitudinalement pour permettre le coulissement et la rotation libres dans ceux-ci des barres transversales respectives de la bande.

9. Un module conformément à l'une quelconque des revendications précédentes, caractérisé par le fait que ledit corps (10) du module ayant une configuration générale en zigzag est obtenu alternativement par des saillies (14) et des creux (16) alternés de manière à permettre l'insertion réciproque des saillies (14) et des creux (16) correspondants des autres modules qui précèdent ou suivent ledit module de façon à définir avec ce dernier ladite surface (18) de la bande de support des articles, et par le fait que les saillies (14) du corps en zigzag (10) du module ont une forme triangulaire allongée apte à permettre l'insertion entre les creux (16) d'une une forme triangulaire allongée correspondante d'un autre module.

10. Un module conformément à la revendication 9, caractérisé par le fait qu'il est muni de saillies terminales (14') du corps ayant une configuration en zigzag (10) du module ayant une largeur égale à la moitié des saillies intermédiaires (14) semblables, de sorte qu'en faisant correspondre les saillies terminales (14') avec une portion correspondante en saillie (14') d'une demi-largeur du module adjacent, la pénétrabilité commune des deux saillies (14', 14') des deux modules adjacents dans un creux défini par le module ou par les modules consécutifs à ce dernier est garantie.

11. Un module conformément à l'une quelconque des revendications précédentes, caractérisé par le fait que ledit corps (10) du module présente des surfaces latérales transversales (22, 24) ayant la forme de sections courbées respectives.

12. Un module conformément à l'une quelconque des revendications précédentes, caractérisé par le fait que lesdites ouvertures (34) sur la surface latérale transversale des modules sont placées sur un plan incliné d'un angle en relation avec la ligne verticale.

13. Un bande transporteuse pour le transport d'articles dans une sens longitudinal de transfert, ladite bande comprenant des barres de support transversales réciproquement écartées l'une de l'autre et au moins un module adapté pour définir la surface de support des articles conformément à l'une quelconque de revendications précédentes.
